Europäisches Patentamt

European Patent Office

Office européen des brevets

(11) Publication number: **0 509 151 A1**

# EUROPEAN PATENT APPLICATION

(21) Application number: **91200913.1**

(22) Date of filing: **17.04.91**

(51) Int. Cl.5: **A01G 25/09, B65H 75/34**

(43) Date of publication of application:
**21.10.92 Bulletin 92/43**

(84) Designated Contracting States:
**AT BE CH DE DK ES FR GB GR IT LI LU NL SE**

(71) Applicant: **C.I.P.A. - S.R.L.**
**Via IV Novembre, 31**
**I-43010 Trecasali (Parma)(IT)**

(72) Inventor: **Dattaro, Mauro, c/o C.I.P.A. - S.R.L.**
**Via IV Novembre 31**
**I-43010 Trecasali (Parma)(IT)**

(74) Representative: **Corradini, Corrado et al**
**Studio Ing. C. CORRADINI & C. S.r.l. 4, Via**
**Dante Alighieri**
**I-42100 Reggio Emilia(IT)**

(54) Drive unit for rotary drum sprinkler irrigation devices.

(57) A drive unit for sprinkler irrigation devices of drum type comprises a turbine (6) directly coupled to a four-speed reduction gear unit (13) having a maximum step-down ratio of between 1:650 and 1:800 and a minimum step-down ratio of between 1:150 and 1:90, the output pinion (14) of said four-speed reduction gear unit engaging with a step-down ratio of between 1:17 and 1:27 a ring gear (15) rigid with the drum (3) on which the hose (33) is wound.

F I G.1

Increasingly widespread use is made of sprinkler irrigation devices comprising a stationary trolley supporting a rotary drum on which a certain quantity of hose is wound in layers formed from successive turns, to be connected at one end to a pressurized water feed pipe and fixed at its opposite end to a skid or carriage, where it is connected to a sprinkler which is rigid with the carriage and is arranged to distribute the water over the land surface.

One of the main problems in constructing said known type of sprinkler irrigation device is to design a suitable drive unit, which must have the following special characteristics:

- firstly, its speed must be adjustable over a wide range so that the sprinkler carriage can be moved at a speed suitable for distributing the required water quantity over the land surface;

- secondly said speed must be very precisely adjustable to the extent of remaining constant while successive layers of hose are wound onto the drum, these obviously increasing the winding diameter.

Sprinkler irrigation devices are known in which the drum is rotated by a hydraulic turbine, which must necessarily be coupled to a speed variator.

The speed variator is required in order to determine the basic speed at which the drum winds the hose within said fairly wide range, whereas auxiliary devices vary said basic speed by a small quantity as each new hose layer is formed on the drum.

This classical arrangement has however serious drawbacks due firstly to the poor efficiency of available speed variators, which require a very large quantity of water to be fed to the turbine to obtain the necessary power for dragging the sprinkler carriage towards the drum.

Secondly they are particularly cost-sensitive in that speed variators suitable for use on these devices are very expensive.

It has so far not been possible to stray from this classical arrangement because of the serious limitation placed on the designer of having to provide effective hose winding within a wide speed range.

The object of the present invention is to provide drive means for hose winding drums of sprinkler irrigation devices which solve the aforesaid problems in a simple and economical manner, by not only involving a comparatively much lower cost than devices using a speed variator but also providing a considerably greater mechanical efficiency.

It should be noted that the mechanical efficiency, which at first sight may seem of little importance, acquires considerable importance when the irrigation takes place through a very long hose network, with consequently related pressure drops, so that the poor efficiency of a speed variator, often used at the maximum step-down ratio, results in such a power absorption as to involve an unrecoverable loss of feed water pressure to below the acceptable limit.

This object is attained according to the invention by providing in parallel with the main irrigation water feed a turbine directly coupled to a speed reduction gear unit with four different possible ratios, which can be selected by operating an external lever.

Basically, this represents a four-speed gearbox acting as a reduction gear unit comprising an output shaft which rotates within the required speed range for correct operation of the sprinkler irrigation device.

The merits and operational and constructional characteristics of the invention will be more apparent from the detailed description given hereinafter with reference to the accompanying drawings.

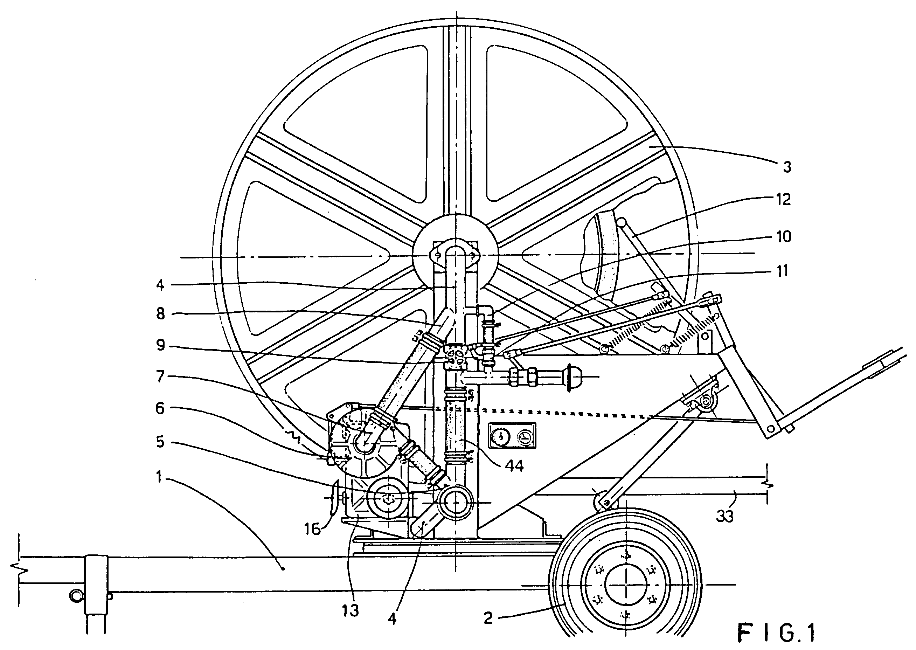

Figure 1 is a side view of a sprinkler irrigation device of the type in question, with the invention applied;

Figure 2 is a front view thereof.

Said figures show a frame 1 mounted on wheels 2 and supporting a winding drum 3 for the hose 33.

A water feed pipe 4 is coupled to the hub of said winding drum by a special rotary coupling, not visible in the figure but of known type, and is connected to a source of pressurized water, which can be distant.

To the side of the drum 3 there extends from the pipe 4 a branch 5 which tangentially feeds a turbine 6, the central discharge 7 of which is returned via the pipe 8 to the main pipe 4.

The straight part 44 of the pipe 4 lying between the branch 5 and the pipe 8 comprises a gate valve 9 manually adjustable by means of a handwheel visible in the figure, to regulate by its degree of opening or closure the quantity of water deviated towards the turbine.

Said valve 9 is bypassed by a small tube 10 which can be partially opened or closed by a ball valve 11 operated by a feeler 12 which senses the number of layers of hose 33 wound on the drum.

As a layer forms, the ball valve 11 is progressively opened to correspondingly reduce the feed to the turbine 6, and thus reduce the rotational speed of the drum so that the hose winding speed remains constant.

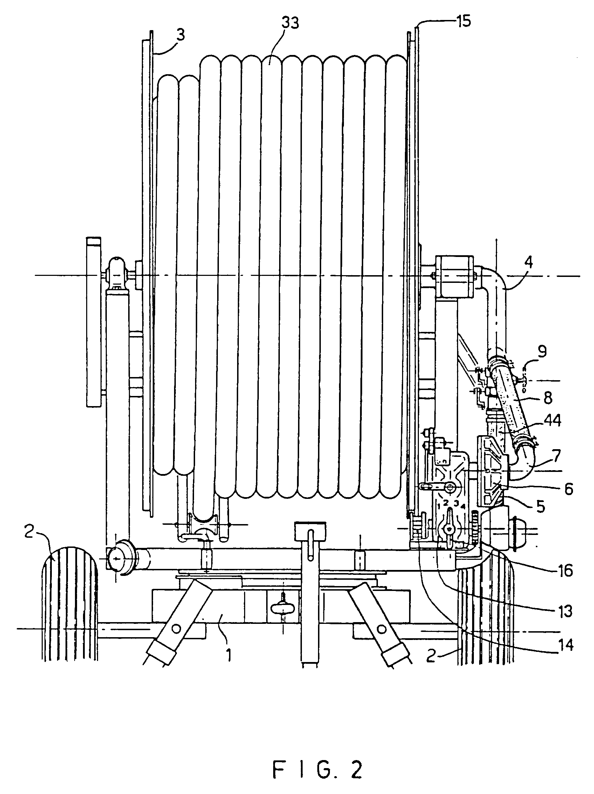

With reference to Figure 2 it can be seen that the output shaft of the turbine 6 is directly connected to a reduction gear unit 13. This reduction gear unit will not be described in detail as it is of totally usual type.

The output shaft of said reduction gear unit 13 comprises a pinion 14 which directly engages toothing 15 provided on one of the two lateral edges of the drum 3.

The reduction gear unit 13 offers four possible step-down ratios which can be chosen at will by an externally operable lever 16.

In the illustrated example, which shows a sprinkler irrigation device of medium size, the turbine can be adjusted to operate at an r.p.m. of between 300 and 1200, depending on the feed water pressure and flow and the position of the gate valve 9.

The reduction gear unit shown offers four possible step-down ratios, of which the highest is 1:720 and the lowest is 1:111, the other two being between these, the step-down ratio between the pinion 14 and the ring gear on the drum periphery being 1:23.

This provides an operating range for the sprinkler irrigation device, in terms of advancement speed, of between about 5 and about 150 metres per hour.

## Claims

1. A drive unit for sprinkler irrigation devices of drum type, as heretofore described, characterised by comprising a turbine (6) directly coupled to a four-speed reduction gear unit (13) having a maximum step-down ratio of between 1:650 and 1:800 and a minimum step-down ratio of between 1:150 and 1:90, the output pinion (14) of said four-speed reduction gear unit engaging with a step-down ratio of between 1:17 and 1:27 a ring gear (15) rigid with the drum (3) on which the hose (33) is wound.

2. A unit as claimed in claim 1, characterised in that the turbine (6) is connected in parallel with the main water feed pipe (4) to the drum, there being provided, in that part of said main pipe between the two points from which the turbine branches, a manually operable gate valve (9) able to vary the flow of water through said main pipe.

3. A unit as claimed in the preceding claims, characterised in that said gate valve is by-passed by a pipe of smaller diameter containing a ball valve (11) which can be opened and closed by a lever connected to a feeler (12) sensitive to the number of layers of hose (33) present on the drum.

F I G.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 186 881 (W.R.LONG)<br>* column 2, line 30 - column 3, line 16 *<br>--- | 1,2 | A01G25/09<br>B65H75/34 |
| Y | US-A-4 003 519 (F.V.KRUSE; D.O.BEHRENDS)<br>* column 4, line 22 - column 6, line 2 *<br>* column 6, line 65 - column 7, line 14 *<br>--- | 1,2 | |
| A | AU-D-2 424 477 (SIMPSON POPE LTD.)<br>* page 3, line 22 - page 5, line 4 *<br>--- | 1,2 | |
| A | DE-A-2 609 442 (M.BEINLICH)<br>* page 7, line 22 - page 10, line 25 *<br><br>----- | 1-3 | |

TECHNICAL FIELDS
SEARCHED (Int. Cl.5)

B65H
A01G

The present search report has been drawn up for all claims

| Place of search | Date of completion of the search | Examiner |
|---|---|---|
| THE HAGUE | 13 DECEMBER 1991 | C. J. GOODALL |

EPO FORM 1503 03.82 (P0401)